# EUROPEAN PATENT APPLICATION

(11) **EP 0 610 160 A2**
(43) Date of publication of application: **10.08.1994**
(21) Application number: 94830016.5
(22) Date of filing: 19.01.1994
(51) Int. Cl.: B60R 16/00

(54) **Device for controlling radio receivers with warning horn for application to motor vehicle steering wheels**

(30) Priority: 19.01.1993 IT MI930037 U
(71) Applicant: CAVIS S.r.l., I-15023 Felizzano (Alessandria) (IT)
(72) Inventor: Colombo, Paolo, I-15023 Felizzano (Alessandria) (IT)
(74) Representative: Cicogna, Franco

(57) **Abstract**

The present invention relates to a device for controlling radio receivers with warning horn for motor vehicle steering wheels (1), which comprises a single rigid printed board (2) thereon there are provided contacts (3,7) for operating the warning horn and microswitch contacts (20) for actuating several functions of a radio-receiver apparatus. A connector is more-over provided for connecting the electric cable to be coupled to the mentioned printed board.

## Description

### BACKGROUND OF THE INVENTION

The present invention relates to a device for controlling radio receivers with warning horn for application to motor vehicle steering wheels.

As is known, there have been already made motor vehicle steering wheels thereon there are applied microswitches in order to drive a radio-receiver and, more specifically, to control its tuning, frequency, volume and mute functions.

In prior art motor vehicle steering wheels of the above mentioned type, the controls are actually fully separated from the other controls which are conventionally provided on a steering wheel, such as, for example, the acoustic warning horn control, which is made by a circuit which is separated from that which operates the radio-receiver.

This causes several drawbacks, since a plurality of electrical connections must be made during the installation operations.

### SUMMARY OF THE INVENTION

Accordingly, the aim of the present invention is to overcome the above mentioned drawbacks, by providing an integrated device for controlling radio-receivers with warning horns, for motor vehicle steering wheels, which affords a possibility of standardizing all of the circuits related to the control of the acoustic warning horn and of the functions of a radio-receiver thereby greatly reducing the wiring complexity during the motor vehicle constructional work.

Within the scope of the above mentioned aim, a main object of the present invention is to provide a device, for application to motor vehicle steering wheels, which has the controls thereof arranged at easily accessible positions, thereby allowing an user to operate all of the desird functions without detaching his/her hands from the steering wheel.

Another object of the present invention is to provide such a device which, owing to its constructional features, is very reliable and safe in operation.

Yet another object of the present invention is to provide such a control device for radio-receivers, specifically designed for application to motor vehicle steering wheels, which can be easily assembled and which, moreover, is very competitive from a mere economic standpoint.

According to one aspect of the present invention, the above mentioned aim and objects, as well as yet other objects, which will become more apparent hereinafter, are achieved by a device with integrated controls for radio receivers with warning horn, specifically designed for application to a motor vehicle steering wheel, with integrated controls, characterized in that said device comprises a single rigid printed board thereon there are provided contacts for operating the warning horn and microswitch contacts for actuating the several functions of a radio receiver apparatus, a connector being moreover provided for connecting the electric cables to be connected to said printed board.

### BRIEF DESCRIPTION OF THE DRAWINGS

Further characteristics and advantages of the present invention will become more apparent hereinafter from the following detailed disclosure of the subject control device for radio-receivers with warning horn, specifically designed for application to a motor vehicle steering wheel, including integrated controls and which is illustrated, by way of an indicative, but not limitative, example, in the accompanying drawings, where:
Figure 1 is a side cross-sectional view of a motor vehicle steering wheel to which there is applied a device according to the present invention;
Figure 2 is a cross-sectional view of the other side of a motor vehicle steering wheel, to which there has been applied a device according to the present invention;

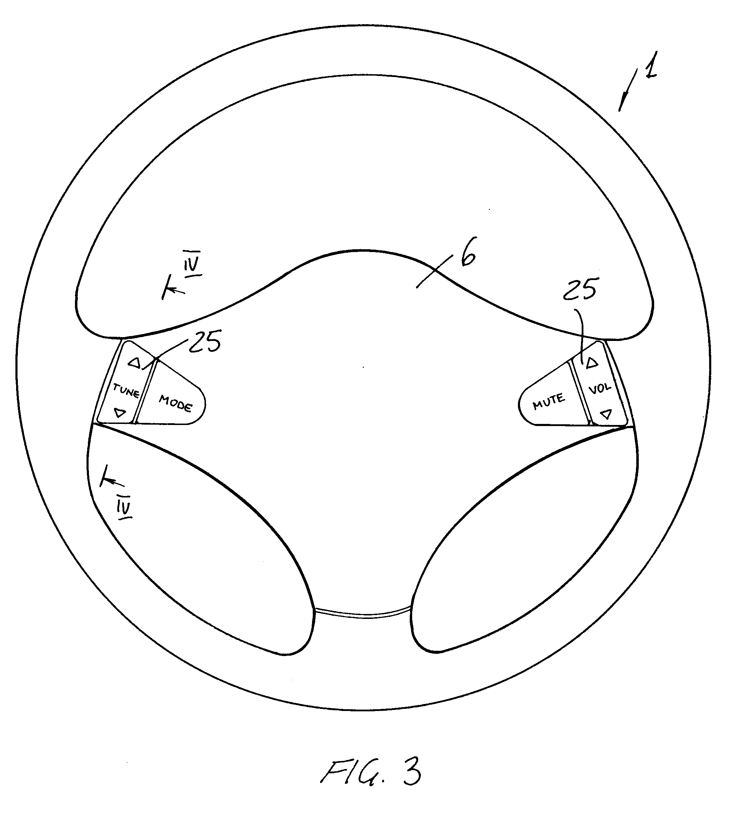

Figure 3 is a schematic view illustrating the subject device applied to a motor vehicle steering wheel, as seen in plan view;
Figure 4 is a cross-sectional view substantially taken along the line IV-IV of Figure 3; and
Figure 5 illustrates a modified embodiment of the control push-buttons for controlling the main functions of the radio-receiver apparatus.

### DESCRIPTION OF THE PREFERRED EMBODIMENT

With reference to the number references of the figures of the accompanying drawings, the subject device, with integrated controls, for controlling a radio-receiver with warning horn for a motor vehicle steering wheel, which has been generally indicated at the reference number 1, comprises a single rigid printed board, having two sides, indicated at the reference number 2, which is connected at an intermediate portion of the motor vehicle steering wheel and defines, at its central region, the portion for operating the warning horn.

More specifically, at a set distance from the printed board 2, there is provided a contact blade element 3, having contact lugs 4.

The contact blade 3 is held spaced by a resilient insert 5, which is superimposed on the printed board.

Above the blade element 3, there is provided an operating cup element 6, having a plurality of pins 7 engaging with the blade element 3 and allowing to operate the warning horn, by means of a pressure exerted at any points so as to provide a very simple and soft operation.

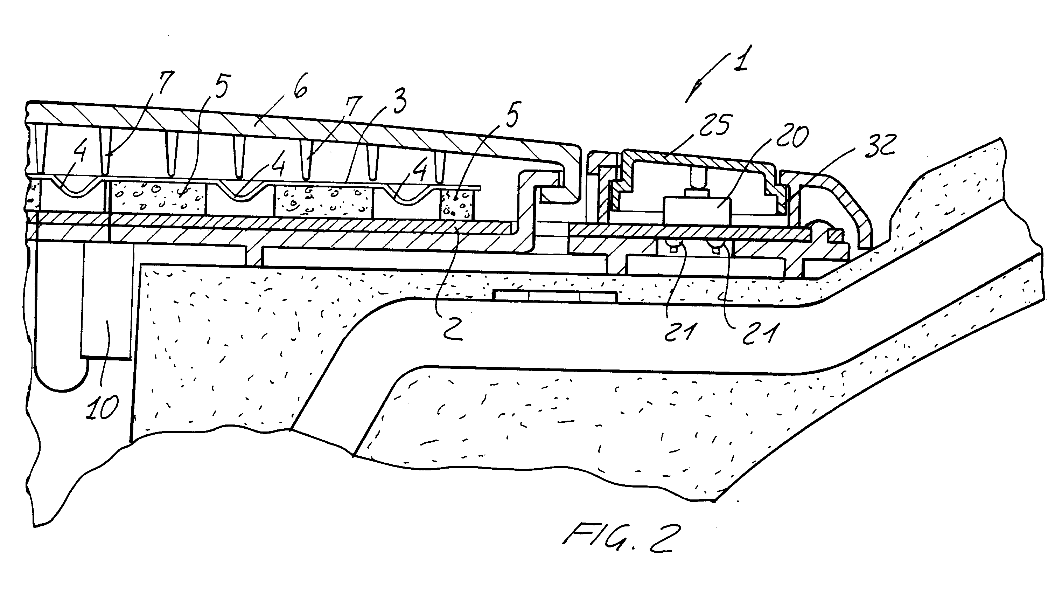

As is schematically shown in figure 2, the printed board 2 is connected, through a connection 10, with the blade element 3.

Moreover, on said printed board 2, there are arranged, preferably at peripheral regions thereof, several controls for controlling or actuating the main functions of a radio-receiver apparatus.

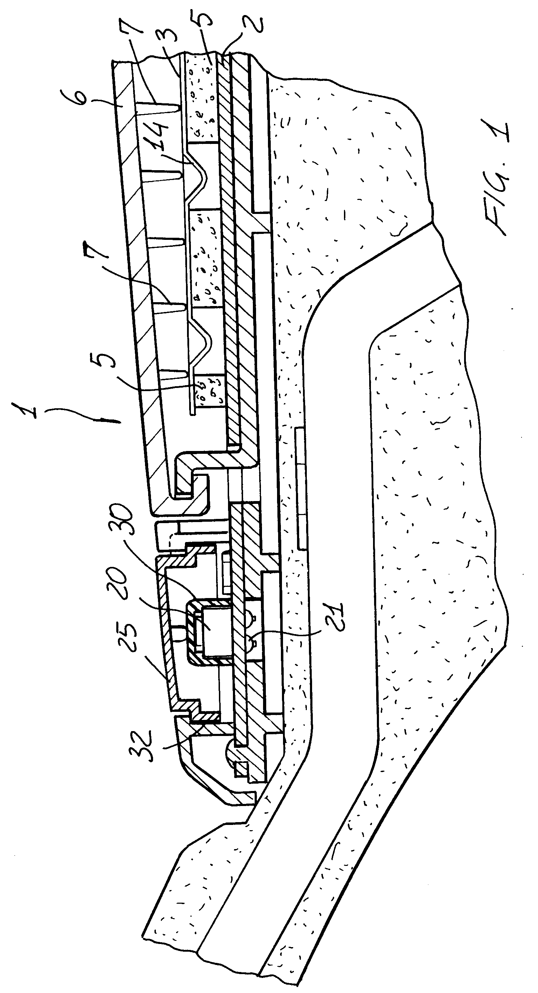

These controls, as is shown in figures 1 and 2, comprise microswitches 20, which are connected to said printed board 2 by means of soldered connections 21, and being arranged under the operating push-buttons 25, which are arranged along the periphery of the motor vehicle steering wheel, at the spokes thereof, so as to be easily accessible.

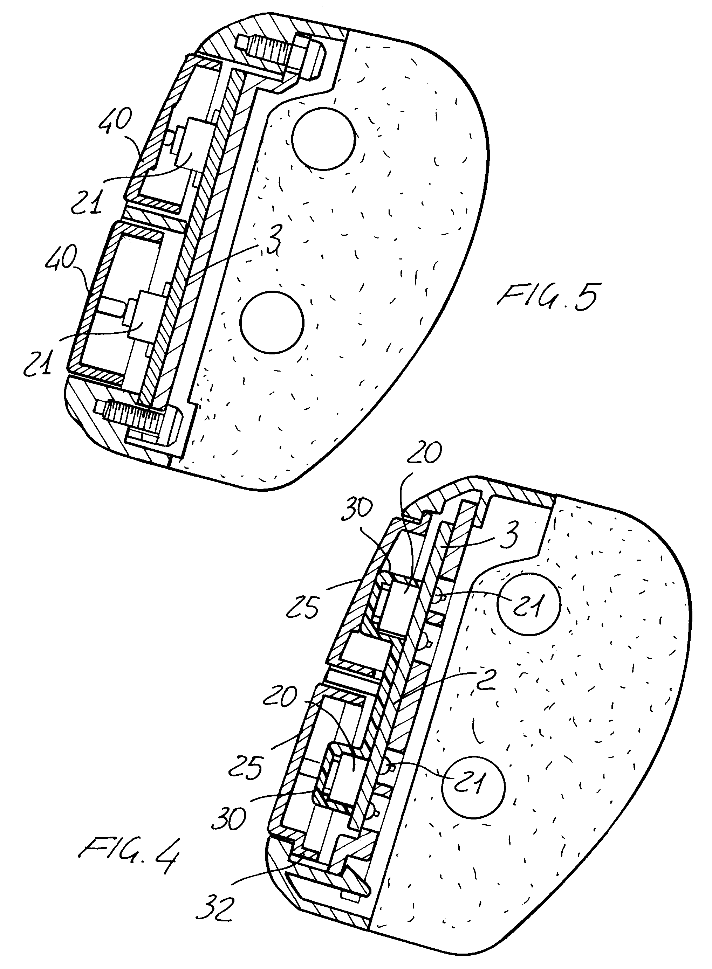

As shown in figure 4, the microswitches 20 are covered by covering elements 30, adapted to operate to protect the switches from dust and the like and moreover adapted to allow the push-button 25 to be resiliently returned to its starting position, said push-button being provided on the perimetral portion thereof with fins 32 for holding it in its proper position.

Thus, there is provided a return resilient force, without the need of using other resilient elements.

As shown in figure 5, the microswitches are directly connected, by soldering, two push-buttons 40, free of fins, which are caused to return to their starting positions, by directly exploiting the resiliency conferred by the microswitches 21.

With the disclosed arrangement, it is possible to provide remote controls, controlled by bubble switches, which allow to operate the automatic tuner and several functions of a radio-receiver.

Advantageously, there are moreover provided push-buttons for controlling the automatic tuner, push-buttons for selecting the several wave ranges, push-buttons for controlling the radio-receiver volume, as well as a muting push-button for instantaneously muting the radio-receiver.

To the printed board, moreover, is connected, at its central portion, a connector allowing to wire the several electric connections, since it collects all of the outputs of the rigid printed circuit and defines a connection region for the several connection electric cables.

From the above disclosure it should be apparent that the invention fully achieves the intended aim and objects.

In particular, the fact is to be pointed out that a control device is provided for controlling a radio-receiver, specifically designed for application to a motor vehicle steering wheel, which comprises a single printed circuit adapted to control both the warning hors and the several functions of the radio receivers, thereby simplifying all of the wiring operations.

In practicing the invention the used materials, provided that they are compatible to the intended use, as well as the continget size and shapes, can be any, depending on requirements.

## Claims

1. A device with integrated controls for radio receivers with warning horn, specifically designed for application to a motor vehicle steering wheel, with integrated controls, characterized in that said device comprises a single rigid printed board thereon there are provided contacts for operating the warning horn and microswitch contacts for actuating the several functions of a radio receiver apparatus, a connector being moreover provided for connecting the electric cables to be connected to said printed board.

2. An integrated-control device, with warning horn for radio-receivers, specifically designed for application to a motor vehicle steering wheel according to the preceding claim, characterized in that said printed circuit has a middle portion thereof including a blade element spaced from the printed circuit body, through the interposition of resilient insert means, said blade element being provided with contact lugs for the electrical connection of said warning horn, on said blade element operating a plurality of pin elements extending from a cup superimposed on said blade element and which can be operated as the warning horn is operated.

3. An integrated-control device according to one or more of the preceding claims, characterized in that said device further comprises an electric connection between said blade element and said printed board.

4. An integrated-control device, according to one or more of the preceding claims, characterized in that said microswitches are of a bubble type.

5. An integrated-control device, according to one or more of the preceding claims, characterized in that said device further comprises covering elements on said microswitches, said covering elements being adapted to provide a resilient return action for the push-button driving the microswitch.

6. An integrated-control device, according to one or more of the preceding claims, characterized in that said push-buttons are provided with holding fins which can be engaged with edge portions of the push-button receiving opening.

7. An integrated-control device, according to one or more of the preceding claims, characterized in that said device further comprises a plurality of push-buttons which are dirctly connected by soldering to the microswitches, and adapted to be returned to their starting positions by the resiliency of said microswitch.
